# EUROPEAN PATENT SPECIFICATION

(11) **EP 3 206 334 B1**
(45) Date of publication and mention of the grant of the patent: **11.09.2019**
(21) Application number: 14905282.1
(22) Date of filing: 06.11.2014
(51) Int. Cl.: H04L 12/24, G08B 29/18

(54) **INFORMATION SENDING METHOD, MANAGED SYSTEM, AND MANAGING SYSTEM**
INFORMATIONSSENDEVERFAHREN, VERWALTETES SYSTEM UND VERWALTUNGSSYSTEM
PROCÉDÉ D'ÉMISSION D'INFORMATIONS, SYSTÈME GÉRÉ ET SYSTÈME GESTIONNAIRE

(43) Date of publication of application: 16.08.2017
(73) Proprietor: Huawei Technologies Co., Ltd., Longgang District Shenzhen, Guangdong 518129 (CN)
(72) Inventor: ZHU, Jian, Shenzhen Guangdong 518129 (CN); ZHANG, Kai, Shenzhen Guangdong 518129 (CN)
(74) Representative: Körber, Martin Hans
(86) International application number: PCT/CN2014/090507
(87) International publication number: WO 2016/070389

(56) References cited:
- WO-A1-2008/074495
- CN-A- 101 179 415
- CN-A- 101 553 008
- CN-A- 101 667 922
- CN-A- 102 238 598
- CN-A- 104 135 394
- US-A1- 2006 233 311
- US-A1- 2008 130 509

## Description

### TECHNICAL FIELD

The present invention relates to the field of network operation and maintenance technologies, and in particular, to an information sending method, a managed system, and a management system.

### BACKGROUND

In a network system including a network element (network element, NE), an element management system (element management system, EMS), and a network management system (network management system, NMS), the NE, the EMS, and the NMS may be classified into a managed system and a management system. Relative to the EMS and the NMS, the NE is a managed system, and relative to the NE, the EMS and the NMS are management systems. Relative to the NE, the EMS is a management system, and relative to the NMS, the EMS is a managed system.

In the prior art, after the managed system generates an alarm due to a fault, the managed system may send, to the management system by using an alarm (alarm), an alarm message (alarm message) that is used to notify occurrence of a fault (fault). This alarm is referred to as an active alarm (active alarm). The alarm message may be a new alarm notification (notifyNewAlarm) defined on a northbound interface in the 3rd Generation Partnership Project (3rd Generation Partnership Project, 3GPP).

However, in some cases, the management system does not monitor in time a possible change in an alarm of the managed system, causing improper processing of the alarm.

WO 2008/074495 A1 discloses prioritized failure announcements.

### SUMMARY

In view of the foregoing technical problem, embodiments of the present invention provide an information sending method, a managed system, and a management system.

A first aspect of the embodiments of the present invention provides a managed system, including:
a processor, configured to determine whether at least one type of alarm information of an alarm is changed, where the alarm information includes: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object; and
a transmitter, configured to: after the processor determines that at least one type of the alarm information of the alarm is changed, send changed alarm information and an identifier of the alarm to a management system.

Based on the first aspect, in a first possible implementation manner of the first aspect, the transmitter is further configured to: after the processor determines that at least one type of the alarm information of the alarm is changed, send unchanged alarm information to the management system.

Based on the first aspect, or the first possible implementation manner of the first aspect, in a second possible implementation manner of the first aspect, the changed alarm information is included in a list in a field form, and the list further includes alarm information before changing.

A second aspect of the embodiments of the present invention provides a management system, including:
a receiver, configured to: after a managed system determines that at least one type of alarm information of an alarm is changed, receive changed alarm information and an identifier of the alarm sent by the managed system, where the alarm information includes: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object; and
means for identifying a changed alarm according to the received identifier of the alarm.

Based on the second aspect, in a first possible implementation manner of the second aspect, the receiver is further configured to: after the managed system determines that at least one type of the alarm information of the alarm is changed, receive unchanged alarm information sent by the managed system.

Based on the second aspect, or the first possible implementation manner of the second aspect, in a second possible implementation manner of the second aspect, the changed alarm information is comprised in a list in a field form, and the list further comprises alarm information before changing.

A third aspect of the embodiments of the present invention provides an information sending method, including:
determining, by the managed system, whether at least one type of alarm information of an alarm is changed, where the alarm information includes: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object; and
sending, by the managed system after the managed system determines that at least one type of the alarm information of the alarm is changed, changed alarm information and an identifier of the alarm to a management system.

Based on the third aspect, in a first possible implementation manner of the third aspect, after the managed system determines that at least one type of the alarm information of the alarm is changed, the method further includes: sending, by the managed system, unchanged alarm information to the management system.

Based on the third aspect, or the first possible implementation manner of the third aspect, in a second possible implementation manner of the third aspect, the changed alarm information is included in a list in a field form, and the list further includes alarm information before changing.

A fourth aspect of the embodiments of the present invention provides an information receiving method, including:
after a managed system determines that at least one type of alarm information of an alarm is changed, receiving, by a management system, changed alarm information and an identifier of the alarm sent by the managed system, where the alarm information includes: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object;
identifying, by the management system, a changed alarm according to the received identifier of the alarm.

Based on the fourth aspect, in a first possible implementation manner of the fourth aspect, after the managed system determines that at least one type of the alarm information of the alarm is changed, the method further includes: receiving, by the management system, unchanged alarm information sent by the managed system.

Based on the fourth aspect or the first possible implementation manner of the fourth aspect, in a second possible implementation manner of the fourth aspect, the changed alarm information is included in a list in a field form, and the list further includes alarm information before changing.

A fifth aspect of the embodiments of the present invention provides a computer program product comprising a program, which is configured to perform any method provided in the above aspects.

According to the technical solutions provided in the embodiments of the present invention, a managed system sends changed alarm information to a management system after an alarm is changed, thereby avoiding a problem of improper processing on an alarm of the managed system caused because the management system does not monitor in time a possible change of the alarm.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a diagram of a network system architecture according to Embodiment 1 of the present invention;
FIG. 2 is a schematic diagram of an information sending method according to Embodiment 2 of the present invention;
FIG. 3 is a schematic diagram of an information sending method according to Embodiment 3 of the present invention;
FIG. 4 is a schematic diagram of an information sending method according to Embodiment 4 of the present invention;
FIG. 5 is a schematic diagram of an information sending method according to Embodiment 5 of the present invention;
FIG. 6 is a schematic diagram of a managed system according to Embodiment 6 of the present invention; and
FIG. 7 is a schematic diagram of a management system according to Embodiment 7 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

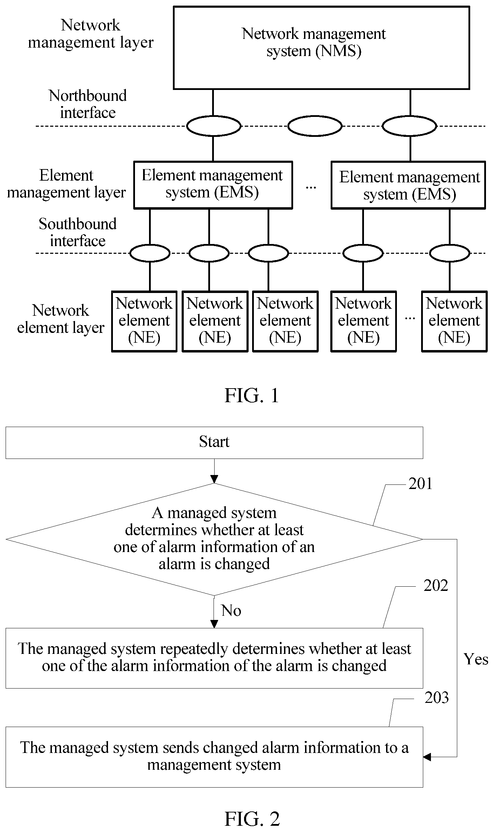

FIG. 1 is a diagram of a system architecture according to Embodiment 1 of the present invention. A network system including an NMS, an EMS, and an NE is divided into three layers according to different network operation functions. The NMS corresponds to a network management layer (network management layer, NML), is mainly used for operation and maintenance management on multi-vendor (multi-vendor) and multi-network (multi-networks) technologies on an entire network, and is connected to at least one EMS by using a northbound interface. The EMS corresponds to an element management layer (element management layer, EML), is mainly used for operation and maintenance management on a single-vendor (single vendor) NE on the entire network, and is connected to at least one NE by using a southbound interface. The NE corresponds to a network element layer (network element layer, NEL), and is used for implementing various basic functions of the network (for example, providing a communications service to a user). The NE is an object on which the EMS performs operation and maintenance management. In a 3GPP (the 3rd generation partnership project, 3rd Generation Partnership Project) standard, various integration reference points (integration reference point, IRP) such as an alarm IRP, a configuration management IRP, and a notification IRP are defined on a northbound interface. An alarm, a configuration management message, and other various notifications can be transferred on the northbound interface between the NMS and the EMS by using these IRPs. Correspondingly, an IRP agent (IRPAgent) is defined in the EMS, and an IRP manager (IRPManager) is defined in the NMS. The alarm, the configuration management message, and the other various notifications that are transferred on the northbound interface can be processed by using the IRP agent and the IRP manager.

In the system architecture shown in FIG. 1, the NE may be an access device and a core network device in a wireless communications system, or may be an access device and a core network device in a wired communications system. The NMS and the EMS may be different servers or different server sets, or may be two different functional modules on a same server or in a same server set.

The access device in the wireless communications system may include a base station, a radio network controller (Radio network controller, RNC), a relay node (relay node), and a wireless local area network (wireless local network, WLAN) access point (Access Point, AP). The base station may be an evolved NodeB (evolved NodeB, eNB), a NodeB (NodeB), and the like. The base station may be a macro base station, or may be a micro base station. According to sizes of coverage of different base stations, a cell in coverage of a base station may be a macro cell (macro cell) covered by the macro base station or a small cell (small cell) covered by the micro base station. The small cell may further be classified into a pico cell (pico cell), a femto cell (femto cell), and/or a micro cell (micro cell) of another type. The access network device in the wired communications system may include a passive optical network PON (Passive Optical Network), a high-speed digital subscriber line HDSL (High Speed Digital Subscriber Line), an asymmetric digital subscriber line ADSL (Asymmetrical Digital Subscriber Line), an integrated digital subscriber loop that has a V5 interface (V5 interface), and the like.

The core network device in the wireless communications system may include a mobility management entity (mobile management entity, MME), a serving gateway (Service Gateway), a packet gateway (Packet Gateway), and the like. The core network device in the wired communications system may include a digital program control exchange, a core network softswitch device, a broadband gateway, and the like.

FIG. 2 is a schematic flowchart of an information sending method according to Embodiment 2 of the present invention. The method includes the following content:
201. A managed system determines whether at least one type of alarm information of an alarm is changed.

If the managed system determines that no alarm information of the alarm is changed, step 202 is performed; if the managed system determines that at least one type of the alarm information of the alarm is changed, step 203 is performed.

The alarm information includes a backup status identifier of an object of the alarm, a backup object identifier of the alarm, an identifier of a change trend of the alarm, threshold information of the alarm, change information of a configured object, a repair suggestion for the alarm, or additional content that is of the alarm and that is used to indicate an attribute of the managed object.

202. The managed system repeatedly determines whether at least one type of the alarm information of the alarm is changed.

That the managed system repeatedly determines whether at least one type of the alarm information is changed may be that when a particular event is triggered, the managed system determines again, according to a preset rule, whether at least one type of the alarm information is changed; or may be that the managed system determines, within a preset time (for example, periodically or aperiodically), whether at least one type of the alarm information is changed.

203. The managed system sends changed alarm information to a management system.

After the managed system determines that at least one type of the alarm information of the alarm is changed, the managed system sends the changed alarm information in the alarm information to the management system.

In this embodiment of the present invention, when a managed system determines changed alarm information, the managed system sends the changed alarm information to a management system, where the changed alarm information includes at least one of a backup status identifier of an object of an alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object. This can avoid a problem of improper processing on an alarm of the managed system caused because the management system does not monitor in time a possible change of the alarm.

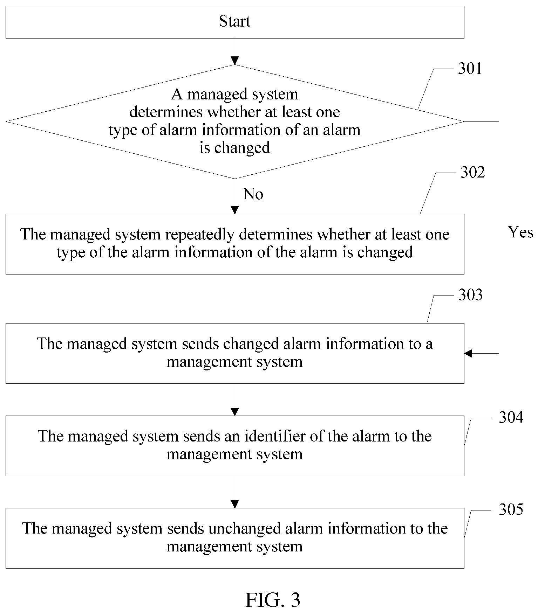

In the foregoing embodiment, after the managed system determines that at least one type of the alarm information of the alarm is changed, in a practical application, the managed system may further send an identifier of the alarm to the management system, or the managed system may further send unchanged alarm information in the alarm information to the management system. With reference to FIG. 3, the following describes an information sending method provided in Embodiment 3.

Step 301 to step 303 in this embodiment are the same as step 201 to step 203 in Embodiment 2, and details are not repeatedly described herein.

Optionally, after it is determined that at least one type of the alarm information of the alarm is changed, the information sending method provided in this embodiment further includes:
304. The managed system sends an identifier of the alarm to the management system.

The identifier of the alarm is used to identify an alarm type of the alarm, for example, a temperature alarm, a humidity alarm, or a cell overload alarm. Before the alarm is cleared, the identifier of the alarm is unchanged. The changed alarm information may be temperature, humidity, cell load, a name of the alarm, and the like that constantly change.

305. The managed system sends unchanged alarm information to the management system.

When determining that some alarm information in the alarm information of the alarm is changed, the managed system sends the unchanged alarm information in the alarm information to the management system, where the unchanged alarm information is alarm information other than the changed some alarm information in the alarm information.

Optionally, the changed alarm information is included in a list in a field form, and the list further includes the alarm information before changing.

It should be noted that, in this embodiment, the alarm information is alarm information of a new alarm. In a practical application, the alarm information may also be alarm information of a changed alarm, which is not limited herein.

In this embodiment of the present invention, the management system may identify a changed alarm according to the received identifier of the alarm, so as to avoid a misoperation of the management system. In addition, the management system may learn the unchanged alarm information and the changed alarm information by reading the received list, so that parsing efficiency of the management system can be improved.

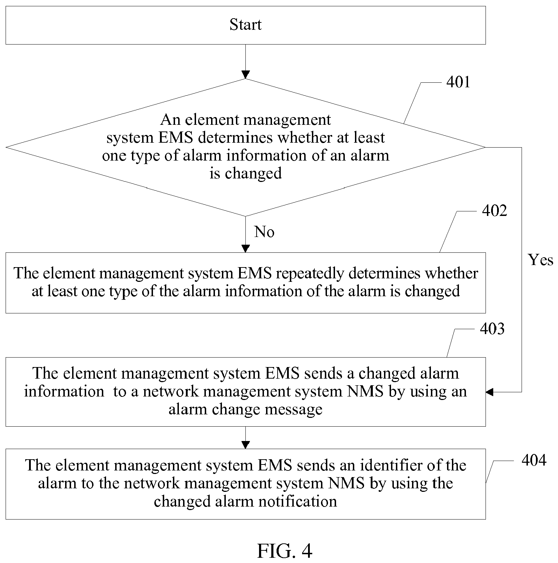

Based on the system architecture shown in FIG. 1, the following describes in detail the information sending method in Embodiment 3. The managed system in the foregoing embodiment may be a network element NE, and the management system may be a network management system NMS or an EMS; or the managed system is an EMS, and the management system is an NMS. The following is described by using an example in which the managed system is the EMS and the management system is the NMS. Referring to FIG. 4, an information sending method provided in Embodiment 4 of the present invention includes:
401. The element management system EMS determines whether at least one type of alarm information of an alarm is changed.

If the element management system EMS determines that no alarm information of the alarm is changed, step 402 is performed; if the element management system EMS determines that at least one type of the alarm information of the alarm is changed, step 403 is performed. The alarm information includes a backup status identifier of an object of the alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object.

The alarm information is carried in an alarm message. The alarm message in this embodiment may be a new alarm notification (notifyNewAlarm) defined on a northbound interface in the 3rd Generation Partnership Project (3rd Generation Partnership Project, 3GPP). In a practical application, the alarm message may be an alarm change notification defined on the northbound interface, or may be a notification defined on a southbound interface or an interface of another type, which is not limited herein.

A format of the new alarm notification in this embodiment is as follows:

| **objectClass** |
|---|
| objectInstance |
| notificationId |
| eventTime |
| systemDN |
| notificationType |
| probableCause |
| perceivedSeverity |
| rootCauseIndicator |
| alarmType |
| specificProblem |
| correlatedNotifications |
| backedUpStatus |
| backUpObject |
| trendIndication |
| thresholdInfo |
| stateChangeDefinition |
| monitoredAttributes |
| proposedRepairActions |
| additionalText |
| additionalInformation |
| alarmId |

objectClass is an object name, objectInstance is an object instance, notificationId is a notification ID, eventTime is an event time, systemDN is a system distinguished name, notificationType is a notification type, probableCause is a possible cause, perceivedSeverity is an alarm severity degree, rootCauseIndicator is a root cause indicator, alarmType is an alarm type, specificProblem is a detailed cause, correlatedNotifications is a correlated notification, backedUpStatus is a backup status, backUpObject is a backup object, trendIndication is a trend identifier, thresholdlnfo is threshold information, stateChangeDefinition is a state change definition, monitoredAttributes is a monitored attribute, proposedRepairActions is a possible repair action, additionalText is additional information, additionallnformation is additional content, and alarmId is an alarm ID.

A field that belongs to the alarm information in the new alarm notification includes: an eventTime field, a perceivedSeverity field, a rootCauseIndicator field, a correlatedNotifications field, a backedUpStatus field, a backUpObject field, a trendIndication field, a thresholdInfo field, a stateChangeDefinition field, a proposedRepairActions field, an additionalText field, an additionalInformation field, a probableCause field, an alarmType field, a specificProblem field, a monitoredAttributes field, and an alarmId field.

Information carried in the eventTime field is an event time of the alarm. Alarm information carried in the perceivedSeverity field is an alarm severity degree of the alarm, where the alarm severity degree is classified into: critical (Critical), major (Major), minor (Minor), cleared (cleared), and indeterminate (indeterminate). When the alarm severity degree is Critical, it indicates that a service is already affected, and an alarm means that an immediate corrective action is required; when the alarm severity degree is Major, it indicates that a service is already affected, and an alarm means that an immediate corrective action is required; and when the alarm severity degree is cleared, it indicates that the alarm is a cleared alarm. Information carried in the rootCauseIndicator field is a root alarm identifier of the alarm. Information carried in the correlatedNotifications field is a notification ID correlated to a root alarm, and is used to indicate, when the alarm is a root alarm, a set of notification IDs correlated to the root alarm. Information carried in the backedUpStatus field is a backup status identifier of a corresponding device on which the alarm occurs, and the backup status identifier is used to indicate that the device is backed up or that the device is not backed up. Information carried in the backUpObject field is a backup object. Information carried in the trendIndication field is an identifier of a change trend of the alarm, where the identifier of the change trend is used to indicate a development trend of the alarm, for example, severity is reduced or is to be increased, and a value may indicate "less severe" (less severe), "no change" (no change), or "more severe" (more severe). Information carried in the thresholdInfo field is threshold information of the alarm, where the threshold information includes a name of a monitored threshold-crossing performance parameter, a threshold, an actually monitored threshold crossing value, a change direction of performance data, a toggling value for a performance change, and the like. Information carried in the stateChangeDefinition field is change information of a configured object, and when a state of the configured object changes, the changed state is carried in the field, where the state includes an administrative state (administrative state), an operational state (operational state), and a usage state (usage state). Information carried in the proposedRepairActions field is a possible suggestion for repairing a fault indicated by the alarm. For example, if temperature of a board gradually increases during an alarm, a maintenance action proposed by a system may change: First, it may be proposed to start a fan to forcibly lower the temperature; if the temperature continues to increase, it may be proposed to disable some functions, so as to cool the board; and if the temperature still continues to increase, the board may be directly powered off to avoid being burned out at a high temperature. Information carried in the additionalInformation field is additional content that is of the alarm and that is used to indicate an attribute of a managed object, such as a cell name in a cell alarm, location information of a radio frequency module in a radio frequency module alarm, an IP address of a peer node in a peer alarm, a temperature value in a temperature alarm, a humidity value in a humidity alarm, a pressure value in a pressure alarm, a standing wave value in a standing wave alarm, a voltage value in a voltage alarm, a current value in a current alarm, and a quantity of alarm oscillations, and the like. Information carried in the additionalText field is text content correlated to the alarm. Information carried in the probableCause field is a possible cause for generating the alarm. Information carried in the alarmType field is a type corresponding to the alarm, and this identifier is used to indicate that the alarm is a root alarm or that the alarm is not a root alarm. Information carried in the specificProblem field is a detailed cause for generating the alarm, and the detailed cause corresponds to an alarm cause ID customized by a vendor. Information carried in the monitoredAttributes field is information about a monitored attribute of the managed object. For example, when the alarm is a cell alarm, the monitored attribute may be latitude and longitude of a cell or a frequency channel number of a cell; when the alarm is a board alarm, the monitored attribute may be temperature of a faulty board, a voltage value of a faulty board, or a current value of a faulty board; and when the alarm is a peer alarm, the monitored attribute may be an IP address of a transmission node. Information carried in the alarmId field is an identifier of the alarm, which may be used to distinguish different alarms. For example, the alarm is a temperature alarm, a humidity alarm, a cell overload alarm, or the like. Before the alarm is cleared, the identifier of the alarm is unchanged. The changed alarm information may be temperature, humidity, cell load, a name of the alarm, and the like that constantly change.

An inherent field in the new alarm notification includes the notificationType field, the notificationId field, the objectClass field, the objectInstance field, and the systemDN field that are described above.

Information carried in the notificationType field indicates a type of the alarm notification. Information carried in the notificationId field is an identifier of the alarm notification, and is used for identification of the alarm notification, where different alarm notifications may be distinguished by using this field. For example, the notificationType field may be used to indicate that the type of the alarm notification is a new alarm notification, an alarm change notification, an alarm clear notification, or the like. Information about a current state of the alarm may be learned by using the type of the alarm notification, where the current state of the alarm includes "active", "inactive", and "changed". If the current state of the alarm is "changed", the changed alarm information may be carried in the alarm change notification and sent to the management system. Further, if the alarm information has changed for multiple times, alarm information obtained after the changes can be separately carried in different alarm notifications and sent to the management system, where the different alarm notifications can be distinguished by using a notification identifier (notificationId). Information carried in the objectClass field and the objectInstance field is the managed object, where the managed object is a software object that is used for describing a manageable attribute and a manageable behavior of a particular network resource, that is, a managed network resource in a system is defined as the managed object in an object-oriented manner. The managed object includes an attribute and a method, which can be used to describe a feature of the managed object. Information carried in the systemDN field is a system distinguished name.

402. The EMS repeatedly determines whether at least one type of the alarm information of the alarm is changed.

That the EMS repeatedly determines whether at least one type of the alarm information is changed may be that when a particular event is triggered, the EMS determines again, according to a preset rule, whether at least one type of the alarm information is changed; or may be that the EMS determines, within a preset time (for example, periodically or aperiodically), whether at least one type of the alarm information is changed.

403. The element management system EMS sends the changed alarm information to a network management system NMS by using an alarm change notification.

After the element management system EMS determines that the backup status identifier of the object, the backup object identifier of the alarm, the identifier of the change trend of the alarm, the threshold information of the alarm, the change information of the configured object, the repair suggestion for the alarm, and the additional content that is of the alarm and that is used to indicate the attribute of the managed object that are in the alarm information of the alarm are changed, the changed alarm information is included in a list in a field form, and the changed alarm information is sent to the NMS by using the alarm change notification.

It should be noted that, in this embodiment, the changed alarm information in the alarm change notification includes the backup status identifier of the object of the alarm, the backup object identifier of the alarm, the identifier of the change trend of the alarm, the threshold information of the alarm, the change information of the configured object, the repair suggestion for the alarm, and the additional content that is of the alarm and that is used to indicate the attribute of the managed object. In a practical application, the changed alarm information may be at least one of the backup status identifier of the object of the alarm, the backup object identifier of the alarm, the identifier of the change trend of the alarm, the threshold information of the alarm, the change information of the configured object, the repair suggestion for the alarm, and the additional content that is of the alarm and that is used to indicate the attribute of the managed object, which is not limited herein.

In this embodiment, a format of the alarm change notification is as follows:

| **objectClass** |
|---|
| objectInstance |
| notificationId |
| systemDN |
| notificationType |
| backedUpStatus |
| backUpObject |
| trendlndication |
| thresholdInfo |
| stateChangeDefinition |
| monitoredAttributes |
| proposedRepairActions |
| additionalText |
| additionalInformation |

It can be learned from the foregoing format of the alarm change notification that, a field that belongs to the changed alarm information carried in the alarm change notification and content carried in the field are as follows:
The field that belongs to the changed alarm information in the alarm change notification includes the backedUpStatus field, the backUpObject field, the trendIndication field, the thresholdlnfo field, the stateChangeDefinition field, the monitoredAttributes field, the proposedRepairActions field, the additionalText field, and the additionalInformation field that are described above, where information carried in the backedUpStatus field is an identifier of a changed backup status of a device corresponding to the alarm. Information carried in the backUpObject field is a changed backup object. Information carried in the trendIndication field is an identifier of a changed change trend of the alarm. Information carried in the thresholdInfo field is changed threshold information of the alarm. Information carried in the stateChangeDefinition field is changed change information of the configured object. Information carried in the monitoredAttributes field is changed information of a monitored attribute of the managed object. For example, when the alarm is a cell alarm, the monitored attribute may be changed latitude and longitude of a cell or a changed frequency channel number of a cell; when the alarm is a board alarm, the monitored attribute may be changed temperature of a board, a changed voltage value of a board, or a changed current value of a board; and when the alarm is a peer alarm, the monitored attribute may be a changed IP address of a transmission node. Information carried in the proposedRepairActions field is a changed possible suggestion for repairing a fault indicated by the alarm. Information carried in the additionalInformation field is a changed attribute of a managed object, such as a changed cell name in a cell alarm, changed location information of a radio frequency module in a radio frequency module alarm, a changed IP address of a peer node in a peer alarm, a changed temperature value in a temperature alarm, a changed humidity value in a humidity alarm, a changed pressure value in a pressure alarm, a changed standing wave value in a standing wave alarm, a changed voltage value in a voltage alarm, a changed current value in a current alarm, and a changed quantity of alarm oscillations. The quantity of alarm oscillations may be used to indicate a severity degree of a toggling alarm, and the NMS may determine a root cause of the alarm by using the quantity of alarm oscillations, so that the alarm can be properly processed. Information carried in the additionalText field is changed text content correlated to the alarm.

It can be learned from the foregoing format of the alarm change notification that, an inherent field that is used to indicate the alarm information and is in the alarm change notification and content carried in the field are as follows:
The inherent field in the alarm change notification includes the notificationType field, the notificationId field, the objectClass field, the objectInstance field, and the systemDN field that are described above.

Information carried in the notificationType field is a type of the alarm change notification. Information carried in the notificationId field is an ID of the alarm change notification, and is used for identification of the alarm change notification, where different alarm notifications may be distinguished by using this field. Information carried in the objectClass field and the objectInstance field is the managed object, where the managed object is a software object that is used for describing a manageable attribute and a manageable behavior of a particular network resource, that is, a managed network resource in a system is defined as the managed object in an object-oriented manner. The managed object includes an attribute and a method, which can be used to describe a feature of the managed object. Information carried in the systemDN field is a system distinguished name.

Optionally, after the EMS determines that the alarm information of the alarm is changed, the information sending method provided in this embodiment further includes:
404. The element management system EMS sends an identifier of the alarm to the network management system NMS by using the alarm change notification.

The identifier of the alarm is used to identify an alarm type of the alarm, for example a temperature alarm, a humidity alarm, or a cell overload alarm. Before the alarm is cleared, the identifier of the alarm is unchanged. The changed alarm information may be temperature, humidity, cell load, a name of the alarm, and the like that constantly change.

After the EMS determines that the changed alarm information is at least one of the backup status identifier of the object of the alarm, the backup object identifier of the alarm, the identifier of the change trend of the alarm, the threshold information of the alarm, the change information of the configured object, the repair suggestion for the alarm, and the additional content that is of the alarm and that is used to indicate the attribute of the managed object, the changed alarm information is included in the list in the field form. Optionally, the list further includes the alarm information before changing and a quantity of the fields.

In this embodiment, the format of the alarm change notification is as follows:

| **objectClass** |
|---|
| objectInstance |
| notificationId |
| systemDN |
| notificationType |
| backedUpStatus |
| backUpObject |
| trendIndication |
| thresholdInfo |
| stateChangeDefinition |
| monitoredAttributes |
| proposedRepairActions |
| additionalText |
| additionalInformation |
| alarmld |
| changedAlarmAttributeNumber |
| changedAlarmAttributes |

It can be learned from the foregoing format of the alarm change notification that, the alarm change notification further includes a changedAlarmAttributes field and a changedAlarmAttributeNumber field, where information carried in the changedAlarmAttributes field is a list that includes fields, and the fields in the list include the changed alarm information and the alarm information before changing. Information carried in the changedAlarmAttributeNumber field is a quantity of the fields in the list.

It should be noted that, in this embodiment, the EMS sends the list that includes the fields and the quantity of the fields to the NMS by using the alarm change message. In a practical application, the EMS may send only the list that includes the fields to the NMS, which is not limited herein.

To implement the alarm change notification in the foregoing method embodiment, a definition method in the Common Object Request Broker Architecture (common object request broker architecture, CORBA) Solution Set (solution set) defined on a northbound interface in the 3GPP may be used, and reference may be made to 3GPP 32.111-3 v9.0.0 "Fault Management Part 3: Alarm Integration Reference Point (IRP)".

An IDL specification file "AlarmIRPConstDefs.idl" is modified as follows:

```
    interface NotificationType
           {const string NOTIFY_FM_NEW_ALARM = "x1";
          const string NOTIFY_FM_CHANGED_ALARM = "x2";
          const string NOTIFY_FM_ACK_STATE_CHANGED = "x3";
          const string NOTIFY_FM_COMMENT_ADDED = "x4";
          const string NOTIFY_FM_CLEARED_ALARM = "x5";
          const string NOTIFY_FM_ALARM_LIST_REBUILT = "x6";
          const string NOTIFY_FM_POTENTIAL_FAULTY_ALARM_LIST =
"x7";
          const string NOTIFY_FM_CHANGED_ALARM_GENERAL = "x9";};
          interface AttributeNameValue
           {const string ALARM_ID = "f";
          const string PROBABLE_CAUSE = "g";
          const string PERCEIVED_SEVERITY = "h";
          const string SPECIFIC_PROBLEM = "i";
          const string ADDITIONAL_TEXT = "j";
          const string ACK_TIME = "k";
          const string ACK_USER_ID = "l";
          const string ACK_SYSTEM_ID = "m";
          const string ACK_STATE = "n";
          const string COMMENTS = "o";
          const string BACKED_UP_STATUS = "p";
          const string BACK_UP_OBJECT = "q";
          const string THRESHOLD_INFO = "r";
          const string TREND_INDICATION = "s";
          const string STATE_CHANGE_DEFINITION = "t";
          const string MONITORED_ATTRIBUTES = "u";
          const string PROPOSED_REPAIR_ACTIONS = "v";
          const string CORRELATED_NOTIFICATIONS = "w";
          const string REASON = "x";
          const string CLEAR_USER_ID = "y";
          const string CLEAR_SYSTEM_ID = "z";
          const string ALARM_LIST_ALIGNMENT_REQUIREMENT = "ff";
          const string SERVICE_USER = "gg";
          const string SERVICE_PROVIDER = "hh";
          const string SECURITY_ALARM_DETECTOR = "ii";
          const string ALARM_RAISED_TIME = "kk";
          const string ALARM_CLEARED_TIME = "ll";
          const string CHANGED_ALARM_ATTRIBUTE_NUBER="mm";
          const string CHANGED_ALARM_ATTRIBUTES="nn"}.
```

An IDL specification file "AlarmIRPNotifications.idl" is modified as follows:

```
module AlarmIRPNotifications
           {interface NotifyChangedAlarmGeneral:
           NotificationIRPNotifications::Notify
           {const string EVENT_TYPE = "notifyChangedAlarmGeneral";
          const string PROBABLE_CAUSE =
          AlarmIRPConstDefs::AttributeNameValue::PROBABLE_CAUSE;
          const string PERCEIVED_SEVERITY =
          AlarmIRPConstDefs::AttributeNameValue::PERCEIVED_SEVERITY;
          const string SPECIFIC_PROBLEM =
          AlarmIRPConstDefs::AttributeNameValue::SPECIFIC_PROBLEM;
          const string AI_VS_PERCEIVED_SEVERITY=
          AlarmIRPConstDefs::AdditionalInformation::AI_VS_PERCEIVED_SEV
          ERITY;
          const string AI_VS_ALARM_TYPE =
          AlarmIRPConstDefs::AdditionalInformation::AI_VS_ALARM_TYPE;
          const string CORRELATED_NOTIFICATIONS =
          AlarmIRPConstDefs::AttributeNameValue::CORRELATED_NOTIFICAT
          IONS;
          const string BACKED_UP_STATUS =
          AlarmIRPConstDefs::AttributeNameValue::BACKED_UP_STATUS;
          const string BACK_UP_OBJECT =
          AlarmIRPConstDefs::AttributeNameValue::BACK_UP_OBJECT;
          const string TREND_INDICATION =
          AlarmIRPConstDefs::AttributeNameValue::TREND_INDICATION;
          const string THRESHOLD_INFO =
          AlarmIRPConstDefs::AttributeNameValue::THRESHOLD_INFO;
          const string STATE_CHANGE_DEFINITION =
          AlarmIRPConstDefs::AttributeNameValue::STATE_CHANGE_DEFINITI
          ON;
          const string MONITORED_ATTRIBUTES =
          AlarmIRPConstDefs::AttributeNameValue::MONITORED_ATTRIBUTE
          S;
          const string PROPOSED_REPAIR_ACTIONS =
          AlarmIRPConstDefs::AttributeNameValue::PROPOSED_REPAIR_ACTI
          ONS;
          const string ADDITIONAL_TEXT =
          AlarmIRPConstDefs::AttributeNameValue::ADDITIONAL_TEXT;
          const string ALARM_ID =
          AlarmIRPConstDefs::AttributeNameValue::ALARM_ID;
          const string SERVICE_USER =
          AlarmIRPConstDefs::AttributeNameValue::SERVICE_USER;
          const string SERVICE_PROVIDER =
          AlarmIRPConstDefs::AttributeNameValue::SERVICE_PROVIDER;
          const string SECURITY_ALARM_DETECTOR =
          AlarmIRPConstDefs::AttributeNameValue::SECURITY_ALARM_DETE
          CTOR;
          const string CHANGED_ALARM_ATTRIBUTE_NUBER =
          AlarmIRPConstDefs::AttributeNameValue::CHANGED_ALARM_ATTRI
          BUTE_NUBER;
          const string CHANGED_ALARM_ATTRIBUTES =
          AlarmIRPConstDefs::AttributeNameValue::
          CHANGED_ALARM_ATTRIBUTES;}.
```

String constants including NOTIFY_FM_CHANGED_ALARM_GENERAL="x9", const string CHANGED_ALARM_ATTRIBUTE_NUBER="mm", and const string CHANGED_ALARM_ATTRIBUTES="nn" are added to the notificationType field. It can be learned from the foregoing implementation that, a string constant in a notificationType field corresponding to the alarm change notification is "x9", which is different from a string constant "x1" in a notificationType field corresponding to an existing new alarm notification and a string constant "x2" in a notificationType field corresponding to an existing alarm change notification. Therefore, the NMS can identify, on the northbound interface, an alarm change notification in this embodiment of the present invention, and define a name of the alarm change notification in this embodiment of the present invention as a general alarm change notification (notifyChangedAlarmGeneral), so as to be distinguished from a name of a changed alarm in the prior art. In addition, the string constants "mm" and "nn" are also added, where the string constant "mm" is used to indicate a quantity of fields that belong to the changed alarm information, and the string constant "nn" is used to indicate a list of the fields that belong to the changed alarm information.

In this embodiment of the present invention, when determining that a changed alarm information is a backup status identifier of an object of an alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object, an EMS sends the change alarm information and an ID of the alarm to an NMS by using an alarm change notification, thereby avoiding a problem of improper processing that may be caused to an alarm of the EMS because the NMS does not detect in time a possible change of the alarm. In another aspect, the EMS further sends a list that includes fields and a quantity of the fields to the NMS by using the alarm change notification, where the fields include the changed alarm information and the alarm information before changing, so that parsing efficiency of the NMS can be improved.

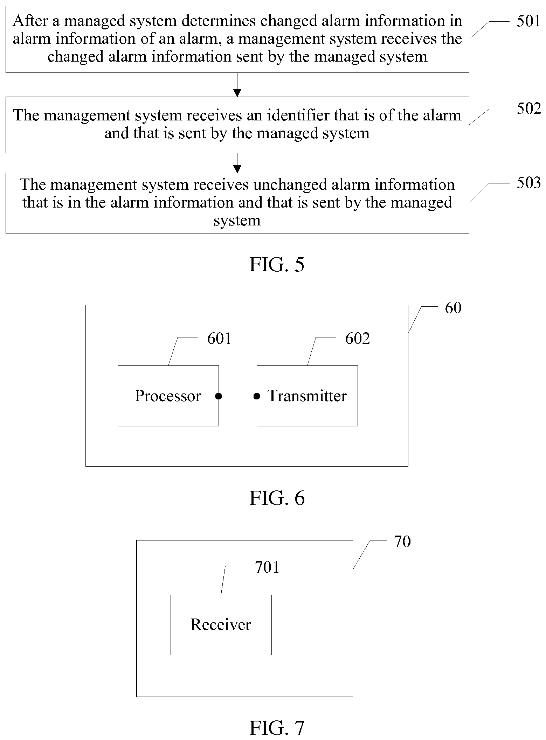

The information sending method in the foregoing embodiment is executed by a managed system. The following is described from a perspective of a management system serving as an execution body. Referring to FIG. 5, an information sending method provided in Embodiment 5 of the present invention includes:
501. After a managed system determines changed alarm information in alarm information of an alarm, a management system receives the changed alarm information sent by the managed system.

After the managed system determines the changed alarm information in the alarm information of the alarm, the management system receives the changed alarm information sent by the managed system, where the changed alarm information includes at least one type of the alarm information, and the alarm information includes a backup status identifier of an object of the alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object.

Optionally, after step 501, the method provided in this embodiment further includes:
502. The management system receives an identifier that is of the alarm and that is sent by the managed system.

It should be noted that, in this embodiment, the identifier of the alarm can be used to distinguish different alarms.

Optionally, after step 501, the method provided in this embodiment further includes:
503. The management system receives unchanged alarm information that is in the alarm information and that is sent by the managed system.

It should be noted that, in this embodiment, the management system is a network management system NMS, and the managed system is an EMS. In a practical application, the management system may also be an EMS, and the managed system is an NE; or the management system is an NMS, and the managed system is an NE, which is not limited herein.

It should be noted that, in this embodiment, a format of and a specific definition method for the alarm change notification are the same as a format of and a definition method for the alarm change notification in Embodiment 4, and details are not repeatedly described herein.

In the foregoing implementation, an information sending method provided in the embodiment of the present invention is described. The following describes a managed system provided in Embodiment 6 of the present invention. The managed system may be configured to execute the method in Embodiment 4, and the managed system may be an NE and/or an EMS. Referring to FIG. 6, a managed system 600 provided in Embodiment 6 of the present invention includes:
a processor 601, configured to determine changed alarm information in alarm information of an alarm, where the changed alarm information includes at least one type of the alarm information, and the alarm information includes a backup status identifier of an object of the alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object; and
a transmitter 602, configured to: after the processor determines the changed alarm information, send the changed alarm information to a management system.

Optionally, the transmitter 602 is further configured to: after the processor determines the changed alarm information, send an identifier of the alarm to the management system.

Optionally, the transmitter 602 is further configured to: after the processor determines the changed alarm information, send unchanged alarm information in the alarm information to the management system, where the unchanged alarm information is alarm information other than the changed alarm information in the alarm information.

It should be noted that, in this embodiment, a format of and a specific definition method for the alarm change notification are the same as a format of and a definition method for the alarm change notification in Embodiment 3, and details are not repeatedly described herein.

According to the managed system provided in this embodiment of the present invention, after a processor 601 determines changed alarm information, a transmitter 602 sends the changed alarm information to a management system, where the changed alarm information includes at least one of a backup status identifier of an object of the alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object. A problem of improper processing on an alarm of the managed system caused because the management system does not monitor in time a possible change of the alarm can be avoided. In addition, the transmitter 602 sends an identifier of the alarm to the management system, so that the management system can identify a changed alarm, so as to avoid a misoperation of the management system. Moreover, the transmitter 602 further sends a list to the management system, and the management system learns, by reading the list, the changed alarm information and the alarm information before changing, so that parsing efficiency of the management system can be improved.

In the foregoing Embodiment 5, the managed system provided in the embodiment of the present invention is described. The following describes a management system provided in Embodiment 7 of the present invention. The management system may be configured to execute the method in Embodiment 5, and the management system may be an EMS and/or an NMS. Referring to FIG. 7, a management system 700 provided in Embodiment 7 of the present invention includes:
a receiver 701, configured to: after a managed system determines changed alarm information in alarm information of an alarm, receive the changed alarm information sent by the managed system, where the changed alarm information includes at least one type of the alarm information, and the alarm information includes a backup status identifier of an object of the alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object.

Optionally, the receiver 701 is further configured to: after the managed system determines the changed alarm information, receive an identifier that is of the alarm and that is sent by the managed system. Optionally, the receiver 701 is further configured to: after the managed system determines the changed alarm information, receive unchanged alarm information that is in the alarm information and that is sent by the managed system, where the unchanged alarm information is alarm information other than the changed alarm information in the alarm information.

It should be noted that, in this embodiment, a format of and a specific definition method for the alarm change notification are the same as a format of and a definition method for the alarm change notification in Embodiment 3, and details are not repeatedly described herein.

According to the management system provided in this embodiment of the present invention, a receiver 701 is configured to: after a managed system determines changed alarm information, receive the changed alarm information, where the alarm information includes at least one of a backup status identifier of an object of the alarm, a backup object identifier of the alarm, an identifier of a change trend of the alarm, threshold information of the alarm, change information of a configured object, a repair suggestion for the alarm, and additional content that is of the alarm and that is used to indicate an attribute of the managed object. A problem of improper processing on an alarm of the managed system caused because the management system does not monitor in time a possible change of the alarm can be avoided. In another aspect, the receiver 701 further receives an identifier that is of the alarm and that is sent by the managed system, so that a changed alarm can be identified according to the received identifier of the alarm, so as to avoid a misoperation of the management system. In addition, the receiver 701 further receives a list sent by the managed system, and the management system learns, by reading the list, the changed alarm information and the alarm information before changing, so that parsing efficiency of the management system can be improved.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A managed system (60), comprising:
a processor (601), configured to determine whether at least one type of alarm information of an alarm is changed, wherein the alarm information comprises: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object; and
a transmitter (602), configured to: after the processor determines that at least one type of the alarm information of the alarm is changed, send changed alarm information and an identifier of the alarm to a management system.

2. The managed system (60) according to claim 1, wherein the transmitter (602) is further configured to: after the processor (601) determines that at least one type of the alarm information of the alarm is changed, send unchanged alarm information to the management system.

3. The managed system according to claim 1 or 2, wherein the changed alarm information is comprised in a list in a field form, and the list further comprises alarm information before changing.

4. A management system (70), comprising:
a receiver (701), configured to: after a managed system determines that at least one type of alarm information of an alarm is changed, receive changed alarm information and an identifier of the alarm sent by the managed system, wherein the alarm information comprises: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object; and
means for identifying a changed alarm according to the received identifier of the alarm.

5. The management system (70) according to claim 4, wherein the receiver (701) is further configured to: after the managed system determines that at least one type of the alarm information of the alarm is changed, receive unchanged alarm information sent by the managed system.

6. The management system (70) according to claim 4 or 5, wherein the changed alarm information is comprised in a list in a field form, and the list further comprises alarm information before changing.

7. An information sending method, comprising:
determining (201), by a managed system, whether at least one type of alarm information of an alarm is changed, wherein the alarm information comprises: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object; and
sending (203, 304), by the managed system after the managed system determines that at least one type of the alarm information of the alarm is changed, changed alarm information and an identifier of the alarm to a management system.

8. The method according to claim 7, wherein after the managed system determines that at least one type of the alarm information of the alarm is changed, the method further comprises: sending (305), by the managed system, unchanged alarm information to the management system.

9. The method according to claim 7 or 8, wherein the changed alarm information is comprised in a list in a field form, and the list further comprises alarm information before changing.

10. An information receiving method, comprising:
after a managed system determines that at least one type of alarm information of an alarm is changed, receiving (501, 502), by a management system, changed alarm information and an identifier of the alarm sent by the managed system, wherein the alarm information comprises: a backup status identifier of an object of the alarm, a backup object identifier of the alarm, an identifier of a change trend of the alarm, threshold information of the alarm, change information of a configured object, a monitored attribute of a managed object, a repair suggestion for the alarm, and additional content that is of the alarm and that is used to indicate an attribute of the managed object;
identifying, by the management system, a changed alarm according to the received identifier of the alarm.

11. The method according to claim 10, wherein after the managed system determines that at least one type of the alarm information of the alarm is changed, the method further comprises: receiving (503), by the management system, unchanged alarm information sent by the managed system.

12. The method according to claim 10 or 11, wherein the changed alarm information is comprised in a list in a field form, and the list further comprises alarm information before changing.

13. A computer program product comprising a program, which is configured to perform the method according to any one of claims 7-12.

## Patentansprüche

1. Verwaltetes System (60), umfassend:
einen Prozessor (601), der ausgelegt ist, zu bestimmen, ob mindestens ein Typ von Alarminformationen eines Alarms geändert wird, wobei die Alarminformationen umfassen: einen Back-up-Status-Identifikator eines Objekts des Alarms, einen Back-up-Objekt-Identifikator des Alarms, einen Identifikator eines Änderungstrends des Alarms, Schwelleninformationen des Alarms, Änderungsinformationen eines ausgelegten Objekts, ein überwachtes Attribut eines verwalteten Objekts, einen Reparaturvorschlag für den Alarm, und zusätzlichen Inhalt, der von dem Alarm ist und der verwendet wird, um ein Attribut des verwalteten Objekts anzuzeigen; und
einen Sender (602), der ausgelegt ist: nachdem der Prozessor bestimmt, dass mindestens ein Typ der Alarminformationen des Alarms geändert wird, geänderte Alarminformationen und einen Identifikator des Alarms an ein Verwaltungssystem zu senden.

2. Verwaltetes System (60) nach Anspruch 1, wobei der Sender (602) ferner ausgelegt ist: nachdem der Prozessor (601) bestimmt, dass mindestens ein Typ der Alarminformationen des Alarms geändert wird, unveränderte Alarminformationen an das Verwaltungssystem zu senden.

3. Verwaltetes System nach Anspruch 1 oder 2, wobei die geänderten Alarminformationen in einer Liste in einer Feldform umfasst sind, und die Liste ferner Alarminformationen vor der Änderung umfasst.

4. Verwaltungssystem (70), umfassend:
einen Empfänger (701), der ausgelegt ist: nachdem ein verwaltetes System bestimmt, dass mindestens ein Typ von Alarminformationen eines Alarms geändert wird, geänderte Alarminformationen und einen Identifikator des Alarms, der von dem verwalteten System gesendet wird, zu empfangen, wobei die Alarminformationen umfassen: einen Back-up-Status-Identifikator eines Objekts des Alarms, einen Back-up-Objekt-Identifikator des Alarms, einen Identifikator eines Änderungstrends des Alarms, Schwelleninformationen des Alarms, Änderungsinformationen eines ausgelegten Objekts, ein überwachtes Attribut eines verwalteten Objekts, einen Reparaturvorschlag für den Alarm, und zusätzlichen Inhalt, der von dem Alarm ist und der verwendet wird, um ein Attribut des verwalteten Objekts anzuzeigen; und
Mittel zum Identifizieren eines geänderten Alarms gemäß dem empfangenen Identifikator des Alarms.

5. Verwaltungssystem (70) nach Anspruch 4, wobei der Empfänger (701) ferner ausgelegt ist: nachdem das verwaltete System bestimmt, dass mindestens ein Typ der Alarminformationen des Alarms geändert wird, unveränderte Alarminformationen, die von dem verwalteten System gesendet werden, zu empfangen.

6. Verwaltungssystem (70) nach Anspruch 4 oder 5, wobei die geänderten Alarminformationen in einer Liste in einer Feldform umfasst sind, und die Liste ferner Alarminformationen vor der Änderung umfasst.

7. Informationssendeverfahren, umfassend:
Bestimmen (201), durch ein verwaltetes System, ob mindestens ein Typ von Alarminformationen eines Alarms geändert wird, wobei die Alarminformationen umfassen: einen Back-up-Status-Identifikator eines Objekts des Alarms, einen Back-up-Objekt-Identifikator des Alarms, einen Identifikator eines Änderungstrends des Alarms, Schwelleninformationen des Alarms, Änderungsinformationen eines ausgelegten Objekts, ein überwachtes Attribut eines verwalteten Objekts, einen Reparaturvorschlag für den Alarm, und zusätzlichen Inhalt, der von dem Alarm ist und der verwendet wird, um ein Attribut des verwalteten Objekts anzuzeigen; und
Senden (203, 304), durch das verwaltete System, nachdem das verwaltete System bestimmt, dass mindestens ein Typ der Alarminformationen des Alarms geändert wird, geänderter Alarminformationen und eines Identifikators des Alarms an ein Verwaltungssystem.

8. Verfahren nach Anspruch 7, wobei, nachdem das verwaltete System bestimmt, dass mindestens ein Typ der Alarminformationen des Alarms geändert wird, das Verfahren ferner umfasst: Senden (305), durch das verwaltete System, unveränderter Alarminformationen an das Verwaltungssystem.

9. Verfahren nach Anspruch 7 oder 8, wobei die geänderten Alarminformationen in einer Liste in einer Feldform umfasst sind, und die Liste ferner Alarminformationen vor der Änderung umfasst.

10. Informationsempfangsverfahren, umfassend:
nachdem ein verwaltetes System bestimmt, dass mindestens ein Typ von Alarminformationen eines Alarms geändert wird, Empfangen (501, 502), durch ein Verwaltungssystem, geänderter Alarminformationen und eines Identifikators des Alarms, der von dem verwalteten System gesendet wird, wobei die Alarminformationen umfassen: einen Back-up-Status-Identifikator eines Objekts des Alarms, einen Back-up-Objekt-Identifikator des Alarms, einen Identifikator eines Änderungstrends des Alarms, Schwelleninformationen des Alarms, Änderungsinformationen eines ausgelegten Objekts, ein überwachtes Attribut eines verwalteten Objekts, einen Reparaturvorschlag für den Alarm, und zusätzlichen Inhalt, der von dem Alarm ist und der verwendet wird, um ein Attribut des verwalteten Objekts anzuzeigen;
Identifizieren, durch das Verwaltungssystem, eines geänderten Alarms gemäß dem empfangenen Identifikator des Alarms.

11. Verfahren nach Anspruch 10, wobei, nachdem das verwaltete System bestimmt, dass mindestens ein Typ der Alarminformationen des Alarms geändert wird, das Verfahren ferner umfasst: Empfangen (503), durch das Verwaltungssystem, unveränderter Alarminformationen, die von dem verwalteten System gesendet werden.

12. Verfahren nach Anspruch 10 oder 11, wobei die geänderten Alarminformationen in einer Liste in einer Feldform umfasst sind, und die Liste ferner Alarminformationen vor der Änderung umfasst.

13. Computerprogrammprodukt, umfassend ein Programm, das ausgelegt ist, das Verfahren nach einem der Ansprüche 7 bis 12 vorzunehmen.

## Revendications

1. Système géré (60), comprenant :
un processeur (601), configuré pour déterminer si au moins un type d'informations d'alarme d'une alarme est changé, dans lequel les informations d'alarme comprennent : un identifiant de statut de sauvegarde d'un objet de l'alarme, un identifiant d'objet de sauvegarde de l'alarme, un identifiant d'une tendance de changement de l'alarme, des informations de seuil de l'alarme, des informations de changement d'un objet configuré, un attribut surveillé d'un objet géré, une suggestion de réparation pour l'alarme, et un contenu additionnel de l'alarme et qui est utilisé pour indiquer un attribut de l'objet géré ; et
un émetteur (602), configuré pour : après que le processeur détermine qu'au moins un type d'informations d'alarme de l'alarme est changé, envoyer des informations d'alarme changées et un identifiant de l'alarme à un système de gestion.

2. Système géré (60) selon la revendication 1, dans lequel l'émetteur (602) est en outre configuré pour : après que le processeur (601) détermine qu'au moins un type des informations d'alarme de l'alarme est changé, envoyer des informations d'alarme inchangées au système de gestion.

3. Système géré selon la revendication 1 ou 2, dans lequel les informations d'alarme changées sont comprises dans une liste sous forme de champ, et la liste comprend en outre des informations d'alarme avant changement.

4. Système de gestion (70), comprenant :
un récepteur (701), configuré pour : après qu'un système géré détermine qu'au moins un type d'informations d'alarme d'une alarme est changé, recevoir des informations d'alarme changées et un identifiant de l'alarme envoyé par le système géré, dans lequel les informations d'alarme comprennent : un identifiant de statut de sauvegarde d'un objet de l'alarme, un identifiant d'objet de sauvegarde de l'alarme, un identifiant d'une tendance de changement de l'alarme, des informations de seuil de l'alarme, des informations de changement d'un objet configuré, un attribut surveillé d'un objet géré, une suggestion de réparation pour l'alarme, et un contenu additionnel de l'alarme et qui est utilisé pour indiquer un attribut de l'objet géré ; et
un moyen pour identifier une alarme changée selon l'identifiant reçu de l'alarme.

5. Système de gestion (70) selon la revendication 4, dans lequel le récepteur (701) est en outre configuré pour : après que le système géré détermine qu'au moins un type des informations d'alarme de l'alarme est changé, recevoir des informations d'alarme inchangées envoyées par le système géré.

6. Système de gestion (70) selon la revendication 4 ou 5, dans lequel les informations d'alarme changées sont comprises dans une liste sous forme de champ, et la liste comprend en outre des informations d'alarme avant changement.

7. Procédé d'envoi d'informations, comprenant :
le fait de déterminer (201), par un système géré, si au moins un type d'informations d'alarme d'une alarme est changé, dans lequel les informations d'alarme comprennent : un identifiant de statut de sauvegarde d'un objet de l'alarme, un identifiant d'objet de sauvegarde de l'alarme, un identifiant d'une tendance de changement de l'alarme, des informations de seuil de l'alarme, des informations de changement d'un objet configuré, un attribut surveillé d'un objet géré, une suggestion de réparation pour l'alarme, et un contenu additionnel de l'alarme et qui est utilisé pour indiquer un attribut de l'objet géré ; et
l'envoi (203, 304), par le système géré après que le système géré détermine qu'au moins un type des informations d'alarme de l'alarme est changé, d'informations d'alarme changées et d'un identifiant de l'alarme à un système de gestion.

8. Procédé selon la revendication 7, dans lequel après que le système géré détermine qu'au moins un type des informations d'alarme de l'alarme est changé, le procédé comprend en outre : l'envoi (305), par le système géré, d'informations d'alarme inchangées au système de gestion.

9. Procédé selon la revendication 7 ou 8, dans lequel les informations d'alarme changées sont comprises dans une liste sous forme de champ, et la liste comprend en outre des informations d'alarme avant changement.

10. Procédé de réception d'informations, comprenant :
après qu'un système géré détermine qu'au moins un type d'informations d'alarme d'une alarme est changé, la réception (501, 502), par un système de gestion, d'informations d'alarme changées et d'un identifiant de l'alarme envoyé par le système géré, dans lequel les informations d'alarme comprennent : un identifiant de statut de sauvegarde d'un objet de l'alarme, un identifiant d'objet de sauvegarde de l'alarme, un identifiant d'une tendance de changement de l'alarme, des informations de seuil de l'alarme, des informations de changement d'un objet configuré, un attribut surveillé d'un objet géré, une suggestion de réparation pour l'alarme, et un contenu additionnel de l'alarme et qui est utilisé pour indiquer un attribut de l'objet géré ;
l'identification, par le système de gestion, d'une alarme changée selon l'identifiant reçu de l'alarme.

11. Procédé selon la revendication 10, dans lequel après que le système géré détermine qu'au moins un type des informations d'alarme de l'alarme est changé, le procédé comprend en outre : la réception (503), par le système de gestion, d'informations d'alarme inchangées envoyées par le système géré.

12. Procédé selon la revendication 10 ou 11, dans lequel les informations d'alarme changées sont comprises dans une liste sous forme de champ, et la liste comprend en outre des informations d'alarme avant changement.

13. Produit-programme d'ordinateur comprenant un programme, qui est configuré pour réaliser le procédé selon l'une quelconque des revendications 7 à 12.
